(19) Europäisches Patentamt

European Patent Office

Office européen des brevets

(11) Veröffentlichungsnummer: **0 321 500**
**B1**

(12) **EUROPÄISCHE PATENTSCHRIFT**

(45) Veröffentlichungstag der Patentschrift: **16.08.90**

(21) Anmeldenummer: **87906401.2**

(22) Anmeldetag: **24.08.87**

(86) Internationale Anmeldenummer:
**PCT/EP87/00476**

(87) Internationale Veröffentlichungsnummer:
**WO 88/01704 10.03.88 Gazette 88/06**

(51) Int. Cl.$^5$: **F 16 K 1/52**, F 16 K 31/50,
F 16 K 31/60, F 16 D 7/04

(54) **ABSPERRVENTIL FÜR FLUIDE.**

(30) Priorität: **25.08.86 YU 1477/86**

(43) Veröffentlichungstag der Anmeldung:
**28.06.89 Patentblatt 89/26**

(45) Bekanntmachung des Hinweises auf die
Patenterteilung:
**16.08.90 Patentblatt 90/33**

(84) Benannte Vertragsstaaten:
**AT BE CH DE FR GB IT LI LU NL SE**

(56) Entgegenhaltungen:
**EP-A-0 073 855**
**DE-B-1 046 971**
**FR-A- 749 550**
**FR-A-1 109 246**
**FR-A-2 575 535**
**GB-A-1 182 256**
**US-A-2 188 850**
**US-A-2 441 038**

(73) Patentinhaber: **STANIC, Miodrag**
**Mühlstrasse 19**
**D-6450 Hanau/Main (DE)**

(72) Erfinder: **STANIC, Miodrag**
**Mühlstrasse 19**
**D-6450 Hanau/Main (DE)**

(74) Vertreter: **Stoffregen, Hans-Herbert, Dr. Dipl.-
Phys.**
**Patentanwälte Strasse & Stoffregen Salzstrasse
11a Postfach 2144**
**D-6450 Hanau/Main 1 (DE)**

Courier Press, Leamington Spa, England.

## Beschreibung

### Stand der Technik

Die Erfindung bezieht sich auf ein Absperrventil für Fluide umfassend ein Ventilgehäuse, einen Ventilkolben mit stromaufwärts zu einem zugeordneten Ventilsitz angeordneten Ventilkegel und einen den Ventilkolben aufnehmenden axial in dem Ventilgehäuse mittels einer Spindel verschiebbaren Kolbenträger, wobei dann die axiale Bewegung des Kolbenträgers in eine radiale Bewegung übergeht, wenn der Ventilkolben eine Hubbegrenzung erreicht.

Ein entsprechendes Absperrventil ist der EP—A—0 073 855 zu entnehmen. Durch die Anordnung des Ventilkegels in bezug auf den Ventilsitz und der Ausbildung einer Rutschkupplung, die verhindert, daß ein Überdrehen des Ventils weder in der Öffnungs- noch in der Schließstellung erfolgt, ist ein überaus funktionstüchtiges Absperrventil insbesonder für Sanitärarmaturen zur Verfügung gestellt. Da außerdem ein entsprechendes Ventil aus Kunststoff herstellbar ist ergeben sich hinsichtlich Produktion und Verschleiß erhebliche Vorteile im Vergleich zu den aus Metall bestehenden.

### Ziel der Erfindung

Aufgabe der vorliegenden Erfindung ist es, ein Absperrventil der eingange genannten so weiterzubilden, daß zum einen mit konstruktiv einfachen Mitteln sichergestellt ist, daß ein "Überdrehen" des Ventils unterbleibt. Auch soll gewährleistet sein, daß ein einfacher Zusammenbau der das Ventil bildenden Elemente möglich ist. Ferner soll vermeiden werden, daß Fremdkörper durch das Ventil strömen, wobei insbesondere ein Rückfluß durch das Ventil unterbunder werden soll. Schließlich soll auch die Möglichkeit geschaffen werden, das Ansperrventil in Armaturen einzubauen, die von Standardabmessungen abweichen.

Die Aufgabe wird im wesentlichen dadurch gelöst, daß der Kolbenträger außenwandig axial verlaufende Vorsprünge aufweist, die in zugeordnete axial verlaufende Aussparungen in der Innenwandung des Ventilgehäuses axial gleiten oder bei Erreichen der Hubbegrenzung zur Erzielung der radialen Bewegung in jeweils benachbarte Aussparungen einbringbar sind und umgekehrt. Dabei sind vorzugsweise die and der Außenwandung des Kolbenträgers vorhandenen Aussparungen "nachgiebig" ausgebildet, um zum einen einenunerwünschten Verschließ zu vermeiden, ohne daß jedoch die axiale Führung hierunter leidet, und zum anderen sichergestellt ist, daß die Vorsprünge bei Erreichen der Hubbegrenzung von Ausnehmung zu Ausnehmung "springen". Vorzugsweise bestehen die einzelen Elemente aus Kunststoff wie aus der Polyazetat- oder Polyamidgruppe, die hohe Standzeiten gewährleisten. Hierdurch bedingt können auch die Fertigungskosten eines erfindungsgemäßen Ventils erheblich reduziert werden. Gewichtsmäßig ergeben sich ebenfalls Vorteile. Nach einer weiteren hervorzuhebenden Ausgestaltung der Erfindung wird der Kolbenhalter mit der Spindel oder Welle über ein Sicherungselement verbunden, das seinerseits über einen radial verlaufenden Schlitz den Kolbenträger durchsetzt.

Selbständig Schutz genießt der Vorschlag, daß die eine von dem Fluid durchströmte Armatur mit dem Ventil verbindende Öffnung von einem koaxial zum Ventilkolben angeordneten und axial verschiebbaren ein Rückschlagventil bildenden Element verschließbar ist. Dabei ist vorzugsweise das als Rückschlagventil ausgebildete Element unterhalb des Ventilsitzes verschiebbar entlang des Ventilkolbens angeordnet, um dichtend an einen Gehäuseabschnitt anzuliegen, der seinerseits gegenüberliegend den Ventilsitz aufnimmt.

Hervorzuheben ist ferner der eigenerfinderische Vorschlag, daß der Ventilkegel von einer hohlzylinderförmigen Kammer axial verschiebbar aufgenommen ist, die ihrerseits dichtend auf eine innerhalb einer Armatur vorhandenen Öffnung abgestützt ist. Hierdurch ergibt sich der Vorteil, daß sich der Ventilsitz selbst nicht in einem rohrförmigen Bereich der Armatur erstrekken muß, wodurch andernfalls eine Abstimmung der Abmessungen aufeinander erfolgen müßte.

Schließlich zeichnet sich die Erfindung insbesondere dadurch aus, daß Längenunterschiede des Ventilgehäuses in bezug auf die Sanitärmaturen dadurch kompensierbar sind, daß ein vorzugsweise als Überwurfmutter ausgebildetes Anschlagelement mittelbar oder unmittelbar auf das Ventilgehäuse geschraubt ist, wobei vorzugwweise in Abhängigkeit von dem zum Schrauben aufzubringenden Drehmoment die durch die Schraubbewegung hervorgerufene axiale Bewegung des Anschlagselements in eine ausschließlich radiale Bewegung übergehen kann. Es wird demzufolge eine Rutschkupplung zur Verfügung gestellt, die sicherstellt, daß auf das Ventilgehäuse unkontrollierte Kräfte nicht einwirken.

Den Ansprüchen sind weitere Merkmale zu entnehmen, die jeweils für sich und/oder in Kombination eigenerfinderischen Gehalt aufweisen.

### Kurze Beschreibung der Zeichnung

Weitere Einzelheiten, Vorteile und Merkmale der Erfindung ergeben sich aus der nachfolgenden Beschreibung von in der Zeichnung dargestellten bevorzugten Ausführungsbeispielen.

Es zeigen:

Fig. 1 eine erste Ausführungsform eines in einer Sanitärarmatur angeordneten Absperrventils,

Fig. 2 das Absperrventil nach Fig. 1 ohne Armatur,

Fig. 3 eine zweite Ausführungsform eines in einer Armatur angeordneten Absperrventils,

Fig. 4 ein weiteres Ausführungsbeispiel eines Absperrventils, dessen wirksame Länge in bezug auf eine Armatur einstellbar ist,

Fig. 5 bis 7 weitere Ausführungsformen von Absperrventilen,

Fig. 8 eine Draufsicht auf ein als Rückschlagventil wirkendes Verschlußelement,

Fig. 9 eine Schnittdarstellung des Elementes von Fig. 8,

Fig. 10 ein Sicherungselement zur Verbindung von Kolbenhalter und Spindel,

Fig. 11 ein Schnittdarstellung des Ventilgehäuses im Bereich der Linie XII—XII in Fig. 2 und

Fig. 12 eine Schnittdarstellung durch den Kolbenträger entlang der Linie XII—XII in Fig. 2.

Detaillierte Beschreibung der Zeichnung

In der nachstehenden Beschreibung von bevorzugten Ausführungsbeispielen von Absperrventilen und Details dieser werden aus Gründen der Übersichlichkeit gleiche Elemente mit gleichen Bezugszeichen versehen.

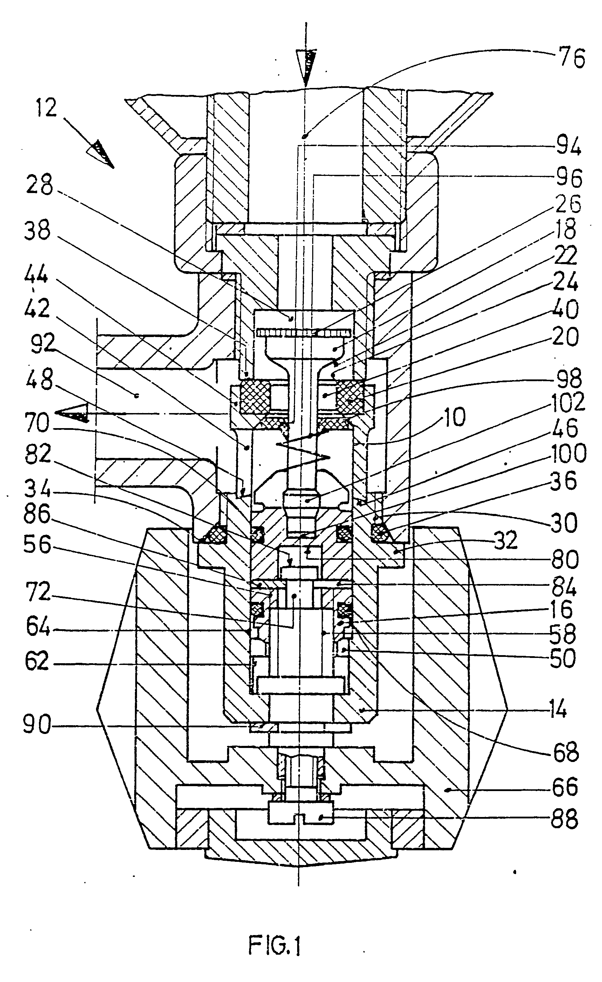

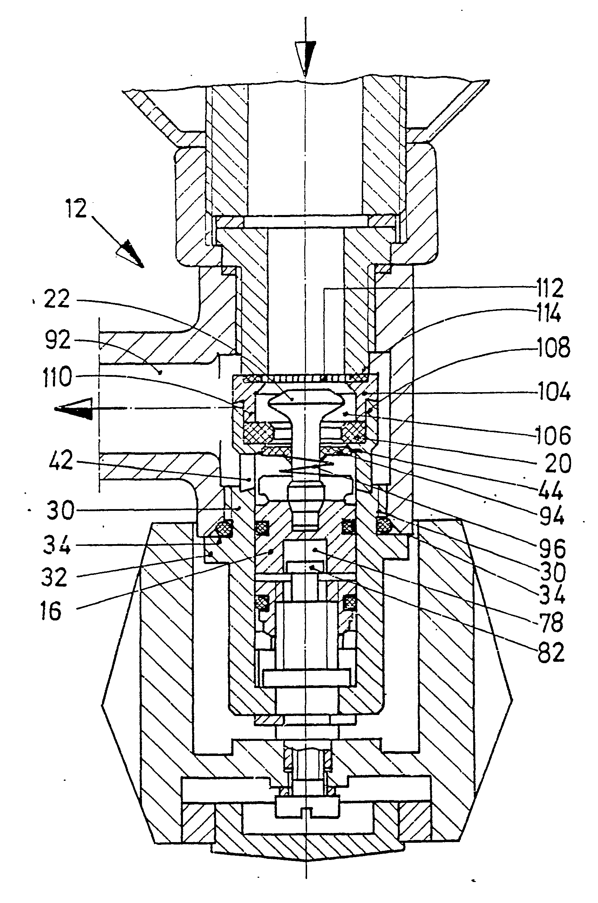

In Fig. 1 ist eine Schnittdarstellung eines Absperrventils (10) dargestellt, das in einer Sanitärarmatur wie Wasserhahn (12) eingebaut ist, auf dessen einzelne Bestandteile nicht näher eingegangen werden muß. Die Strömungsrichtung, in der ein Fluid die Armatur (12) und damit das Ventil (10) durchströmt, ist durch die Pfeile angegeben.

Das Absperrventil (10) umfaßt ein Ventilgehäuse (14), in dem ein Kolbenträger (16) aufgenommen ist, der seinerseits in seinem vorderen Bereich einen Ventilkolben (18) mit Ventilkopf (22) aufnimmt. Der Ventilkopf (22) ist auf einen Ventilsitz (20) absenkbar bzw. von diesem abhebbar. Im Dichtungsbereich zum Ventilsitz (20) ist der Ventilkopf (22) konisch ausgebildet, um so eine gute Dichtung zr erzielen. An seinem freien planen Ende kann der Ventilkopf (22) ein scheibenförmigen Element (26) aufweisen, das von Fluid durchströmbar ist, jedoch Fremdpartikel abweist. Dabei ist das Element (26) derart dem Durchmesser eines Rohrabschnitts (28) der Armatur (12) angepaßt, in dem der Ventilkegel (22) verschiebbar ist, daß ein Umströmen weitgehend ausgeschlossen ist.

Das Ventilgehäuse (14) ist über ein Gewinde (30) in der Armatur (12) eingeschraubt. Zur Begrenzung weist das hohzylinderförmig ausgebildete Ventilgehäuse (14) unterhalb des Gewindes (30) einen umlaufenden Vorsprung (32) auf, der gegen einen Absatz (34) des Wasserhahns (12) stößt, wenn das Ventilgehäuse (14) im erforderlichen Umfang eingeschraubt ist. In diesem Bereich befinder sich ferner eine O-Ringdichtung (36). Ist das Ventilgehäuse (14) im erforderlichen Umfang eingeschraubt, dann stellt der Abstand zwischen dem Vorsprung (32) und dem freien Ende des Ventilsitzes (20) sicher, daß der Ventilsitz (20) dichtend an einen ringförmig ausgebildeten Vorsprung (38) der Armatur anliegt. Hierdurch bedingt ist gewährleistet, daß das Fluid ausschließlich durch die Öffnung (40) im Ventilsitz (20) und sodann über die Auslaßöffnung (42) aus der Armatur (12) herausströmen kann.

Bezüglich der Abmessungen des Ventilgehäuses (14) bzw. des Vorsprungs (32) ist zu bemerken, daß vorzugsweise eine Abstimmung auf 1/2" oder 3/4" Gewinde erfolgt.

Der Ventilsitz (20) ist von einem hohlzylinderförmigen, die Auslaßöffung (42) aufweisenden Element (44) aufgenommen, das seinerseits lösbar auf den freien Rand (46) des Ventilgehäuses (14) aufsetzbar ist. Um eine sichere Führung und insbesondere beim Einbau ein unerwünschtes Verrutschen der Elemente zueinander zu unterbinden, ist der Rand (46) mit einer Vertiefung versehen, dem der zugewandte Rand (48) des Körpers (44) angepaßt ist. Es erfolgt in etwa eine stufenförmige Verzahnung.

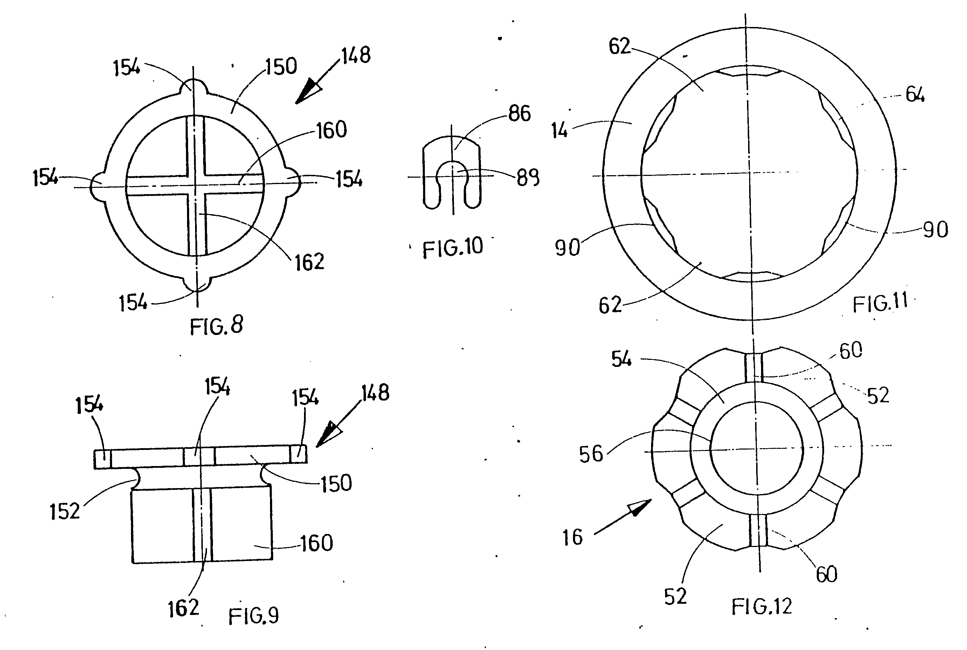

Um den Ventilkegel (22) im gewünschten Umfang auf den Ventilsitz (20) abzusetzen bzw. von diesem abzuheben, ist der Kolbenträger (16) axial verschiebbar innerhalb des hohlzylinderförmig ausgebildeten Ventilgehäuses (14) angeordnet. Hierzu weist der Kolbenträger in seinem hinteren, also in der Zeichnung unteren Ende (50) vorzugsweise sternförmig angeordnete Vorsprünge (52) auf, wie sie in Fig. 12 dargestellt sind. Dabei gehen die Vorsprünge von einer hohlzylinderförmigen Innenwandung (54) aus, die ein Innengewinde (56) aufweist, das mit einem Außengewinde einer Spindel (58) zusammenwirkt. Den Vorsprüngen (52), die durch Schlitz (60) voneinander getrennt sind und damit eine gewisse Nachgiebigkeit erfahren, greifen in Aussparungen (62) der Innenwandung (64) des Ventilgehäuses (14) ein. Wird nun die Spindel (58) über eine Handhabe wie Griff (66) in Drehbewegung versetzt, so wird der Kolbenträger (60) in eine Axialbewegung gezwungen, die durch das Zusammenwirken der Vorsprünge (52) mit den Aussparungen (62) sichergestellt ist.

Um eine verschleißarme Axialbewegung des Kolbenträger (16) entlang der Innenwandung (64) des Ventilgehäuses (14) zu ermöglichen, erfolgt eine Abstützung über Dichtringe (68) und (70), wodurch nicht nur eine Leichtgängigkeit, sondern auch eine Abdichtung gewährleistet ist, die sicherstellt, daß das Fluid nicht zwischen Ventilgehäuseinnenwandung und Kolbenträger gelangen kann.

Die Spindel (58) umfaßt einen äußeren ersten Abschnitt (72) und einen sich anschließenden weiteren Abschnitt (74) größeren Durchmessers mit dem Außengewinde auf, das mit dem Innengewinde (56) des Kolbenträgers (16) zusammenwirkt. Der Abschnitt (72) ist dabei innerhalb einer koaxial zum Ventilgehäuseachse (76) vorhandenen zylindrischen Aussparung (78) bewegbar, die ihrerseits stirnseitig von einer Wandung (80) begrenzt ist. Der Abschnitt (72) weist stirnseitig einen scheibenförmigen Abschnitt (82) größeren Durchmessers auf, so daß sich zwischen dem Abschnitt (72) und dem Abschnitt (82) eine Stufe ausbilder. Über einen radial verlaufenden Schlitz (84) wird nun von der Außenseite des Kolbenträgers (16) ein Sicherungselement (86), das gemäß Fig. 10 in Draufsicht eine U-Form aufweist, in die Aussparung (78) geschoben, wobei der Abschnitt (72) der Spindel (58) umfaßt wird. Da das Sicherungselement (86) mit einer Aussparung (89) versehen ist, die dem Durchmesser des Abschnitts (72) entspricht, ist sichergestellt, daß beim Bewegen der Spindel (58) der außenliegende Abschnitt (82) das Sicherungselement (86) nicht durchsetzen kann. Hierdurch ist eine Hubbegrenzung der Spindel (58) und damit des Kolbenträgers (16) bzw. des Ventilkolbens (18) gewährleistet.

Diese Hubbegrenzung wird zum einen durch die Wandung (80) und zum anderen durch die Sicherungsscheibe (96) bestimmt, je nachdem ob das Element (82) an der Wandung (80) oder dem scheibenförmigen Sicherungselement (86) anstößt. In den Grenzstellungen ist gleichzeitig gewährleistet, daß der Ventilteller (22) entweder auf dem Ventilsitz (20) dichtend aufliegt oder zu diesem maximalen Abstand aufweist (Darstellungen in den Fig.). In diesem Fall würde ein weiteres Betätigen des Handgriffs (66) und damit der mit diesem über eine Schraube (88) verbundenen Spindel bei Absperrventilen üblicher Konstruktion ein weiteres Drehen nicht mehr ermöglichen. Vielmehr würde eine unerwünschte Belastung auf den Ventilkegel bzw. den Ventilsitz (beim Schließvorgang) erfolgen oder die Handhabe unzulässig angezogen werden. Eine hoher Verschleiß und gegebenfalls Zerstörung wären die Folgen. Erfindungsgemäß ist jedoch eine weitere Drehung der Handhabe (66) und damit der Spindel (58) möglich, da nummehr die im gewissen Umfang nachgiebig ausgebildeten Vorsprünge (52) aus den Ausnehmungen (62) über die zwischen diesen vorhandenen Erhebungen (90) an der Innenwandung des Ventilgehäuses (40) gleiten, so daß die Drehbewegung des Griffs (66) unmittelbar auch in eine Radialbewegung der Spindel (16) umgesetzt wird, ohne daß gleichzeitig eine weitere axiale Verschiebung des Kolbenträgers (16) erfolgt. Dieses "Springen" der Vorsprünge (52) über die Erhebungen (90) kann jedoch nur dann erfolgen, wenn der scheibenförmige Abschnitt (82) entweder mit der Wandung (80) oder dem Sicherungselement (86) wechselwirkt. Andernfalls werden die über die Spindel übertragenen Drehkräfte nicht ausreichen, daß die Vorsprünge (52) über die Erhebungen (90) in andere Aussparungen (62) springen.

Sobald die Handhabe in entgegengesetzter Richtung gedreht wird, erflogt eine unmittelbare axiale Bewegung des Kolbenträgers (16) und damit des Ventilkolbens (18), so daß eine Verzögerung in der Öffnungs- bzw. Schließbewegung nicht auftritt.

Damit die Spindel (58) selbst nicht axial verschiebbar ist, erfolgt über eine Scheibe (90), die an der unteren Stirnwand des Ventilgehäuses (14) angeordnet ist, eine Sicherung.

Um zu gewährleisten, daß über die Austrittsöffnung (92) der Armatur (12) Fluid nicht zurückströmen und zurück in das angeschlossene Leitungsnetz gelangen kann, ist ein Abdichtelement (94) vorgesehen, das als Rückschlagventil dient. Das Element (94) umgibt zum einen den Ventilkolben (18) und wird zum anderen über ein Federelement (96) in Richtung des Ventilsitzes (20) bewegt. Das scheibenförmige Element (94) ist als Kragen ausgebildet und liegt an einem nach innen gerichteten Abschnitt (98) der zylinderförmigen Kammer (44) dichtend an, die ihrerseits den Ventilsitz (20) außenseitig aufnimmt. Die Kraft des Federelementes (96) ist so gewählt, daß der Öffnung (40) durch das Element (94) normalerweise verchlossen ist. Hierdurch ist sichergestellt, daß über die Öffnung (92) eindringendes Fluid nicht in das Leitungsnetz zurückströmen kann. Erst wenn die von dem in Pfeilrichtung strömenden Fluid hervorgerufene Kraft die der Feder (96) überwendet, hebt das Element (94) von dem Abschnitt (98) ab, so daß durch die Armatur (12) Fluid in gewohnter Weise fließen kann.

Das Ventilgehäuse (14), die Spindel oder Welle (58), der Kolbenträger (16), der Ventilsitz (20), der Ventilkolben (18) und das Abdichtelement (94) sind erkennbar koaxial zueinander entlang der Achse (76) angeordnet. Dabei ist der Ventilkolben (18) in Art einer Schnappverbindung in eine Aussparung (100) in dem dem Ventilsitz (20) zugewandten Bereich des Kolbenträgers (16) eingesetzt. Hierzu weist der Ventilkolben (18) an seinem unteren Ende eine wulstartige Verstärkung (102) auf, die in die erwähnte Aussparung (100) über nicht dargestellte Schlitze eingebracht wird. Hindurch ist nicht nur ein einfaches Zusammensetzen gewährleistet, sondern auch eine relative Bewegung zwischen den Elementen möglich. Dies führt zu einer guten Abdichtung zwischen Ventilsitz (20) und Ventilkopf (22). Sollten sich z.B. in diesem Bereich Kalkrückstände ansammeln, kann der Ventilkopf (24) gekippt werden, um ein Ausgleich und damit eine Abdichtung zu ermöglichen.

In der Fig. 3 ist eine weitere Ausgestaltung des erfindungsgemäßen Absperrventils (10) dargestellt, das ebenfalls in einer Armatur (12) eingebaut ist. Im Unterschied zu dem Ausführungsbeispiel nach Fig. 1 erstreckt sich jedoch die den Ventilsitz (20) aufnehmende hohlzylinderförmig ausgebildete Halterung (40) über den Ventilsitz hinweg, um ein topfförmiges Element (104) aufzunehmen, das eine Kammer (106) begrenzt, in der der Ventilteller (22) axial bewegbar ist. Dabei erfolgt die Verbindung zwischen den Elementen (44) und (104) durch Aufeinanderstecken. Hierzu verlaufen Abschnitte von Wandungen (108) und (110) parallel zueinander und sitzen über Stufen aufeinander. Die Wandungen (108) und (110) bilden demzuflolge außen-bzw. innenliegende Wandungen der in diesem Bereich hohlzylinderförmig ausgebildeten Elemente (44) und (104). Letzteres ist durch eine Scheibe (112) abgedeckt, die für ein Fluid durchlässig ist, jedoch Fremdkörper abweist.

Das mit dem topfförmigen Element (104) abschließende Ventilgehäuse wird nun in die Armatur (12) derart eingesetzt, daß ein rohrförmiger Abschnitt (114) dicht an der Stirnseite des Elements (104) anliegt, um sicherzustellen, daß das Fluid ausschließlich in Pfeilrichtung durch die Kammer (106) zu der Austrittsöffung (42) bzw. (92) gelangen kann. Der Vorteil der diesbezüglichen Konstruktion ist, daß der Ventilteller (22) in der Kammer (106) bewegbar ist, ohne daß ein Anpassung auf der Armatur (12) erfolgt; denn normalerweise bewegt sich der Ventilteller (22) innerhalb eines rohrförmigen Abschnitts der Armatur, wie es auch in Fig. 1 verdeutlicht ist.

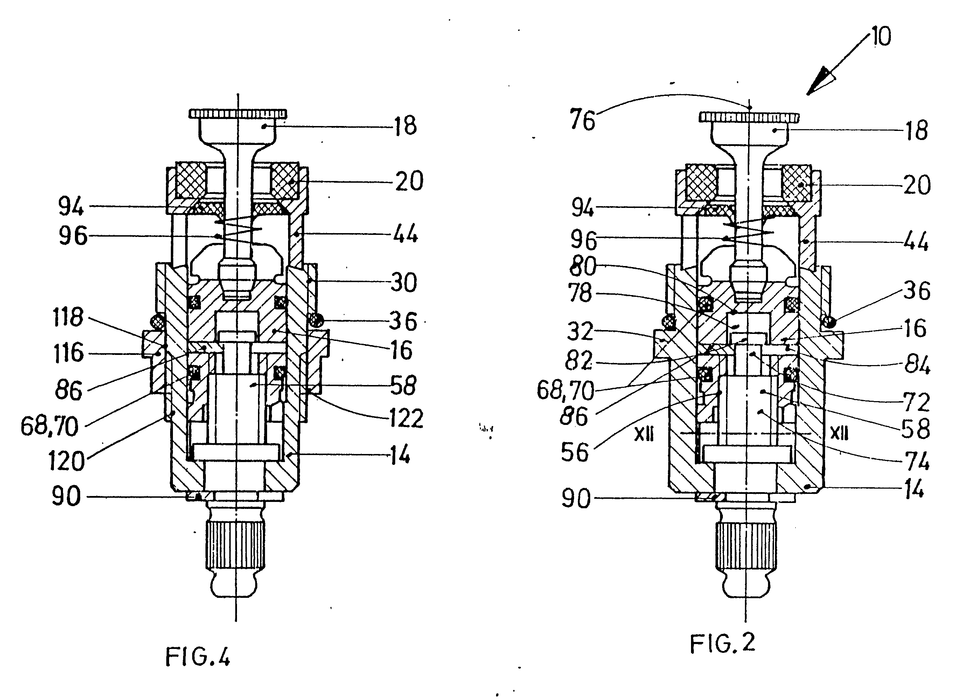

In Fig. 4 ist eine weitere hervorzuhebende eigenständige Variante der Erfindung erkennbar. Um den Abstand zwischen den Befestigungsbereichen des Absperrventils in der Armatur, also im Ausführungsbeispiel nach Fig. 1 zwischen dem Ventilsitz (20) und dem Vorsprung (32) verändern zu können, ist ein ebenfalls einen nach außen ragenden Vorsprung (116) aufweisendes Anschlagelement (118) in Form einer Überwurfmutter vorgesehen, das auf ein Gewinde (122) eines Zwischenelemetes (120) schraubbar ist, das seinerseits als Hohlzylinder ausgebildet und auf der Außenwandung des Ventilgehäuses (14) aufgesetzt ist. Dabei besteht die Möglichkeit, daß die Verbindung zwischen dem Element (120) und dem Ventilgehäuse (14) in Art einer Rutschkupplung erfolgt, so daß beim Aufschrauben eine Drehmomentbegrenzung dann erfolgt, wenn unzulässige Kräfte einwirken. Die Rutschkupplung kann dabei in Art von miteinander wechselwirkenden Vorsprüngen und Aussparungen ausgebildet sein. Dabei können die Vorsprünge dann in benachbarte Aussparungen springen, also das Element (122) eine ausschließlich Radialbewegung ausüben, wenn die aufgebrachten Schraubkräfte einen Sollwert überschreiten.

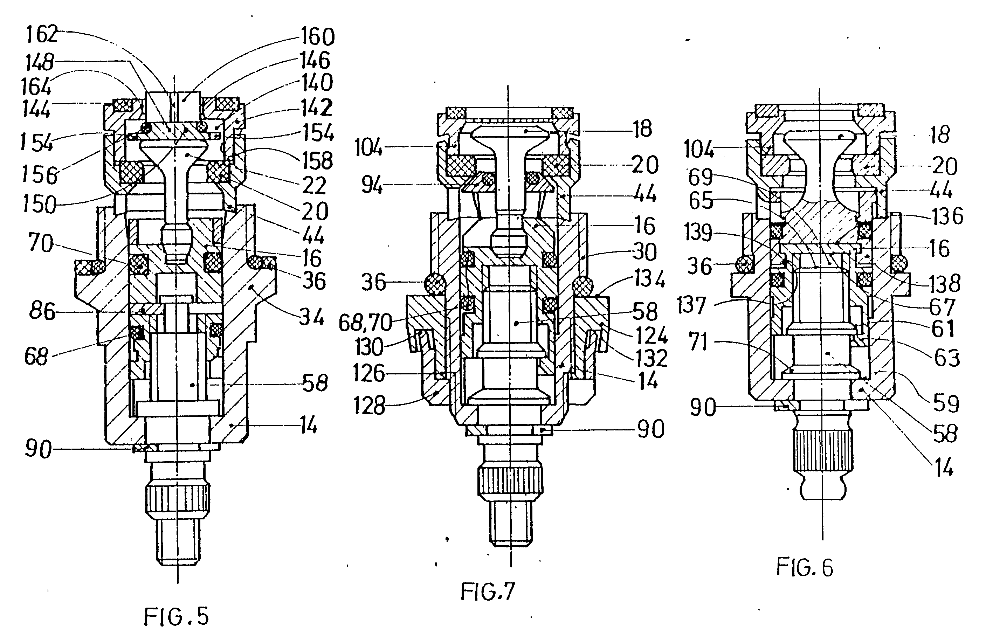

In Fig. 7 ist eine Variante eines Anschlagselementes (124) dargestellt. Das Anschlagselement ist über ein Gewinde (126) mit der Außenwandung des Ventilgehäses (14) verschraubbar. Im unteren Bereich ist das Anschlagselement (124) von einer Art Gegenmutter (128) umgeben, die mit ihrem freien oberen Ende (130) in eine im unteren Rand eingelassene Vertiefung wie umlaufende Nut (132) des Anschlagselement (124) eingreift. Am unteren Ende ist das Element (128) an der Außenwandung des Ventilgehäuses (14) abgestützt. Im Bereich der Nut (132) wirken die Elemente (124) und (128) in Art einer Rutschkupplung zusammen. So gehen von dem in die Nut hineinragenden Abschnitt (130) nicht dargestellte Vorsprünge aus, die in Aussparungen an der Innenwandung der Nut (132) eingreifen. Wird nun die Gegenmutter (128) außenseitig erfaßt und in Drehbewegung gesetzt, so wird das Anschlagselement (124) in Abhängigkeit von der Drehbewegung in Richtung der Abdichtung (36) gedreht oder von dieser entfernt. Sobald der Vorsprung (134) an einen nicht dargestellten Anschlag einer Armatur stößt und fest anliegt, tritt die Rutschkupplung in Kraft. Das bedeutet, daß die Vorsprünge der Gegenmutter (128) von Ausbehmung zu Ausnehmung in der Nut (132) springen, so daß die Drehbewegung des Elementes (128) nur noch derart auf das Anschlagselement (124) übertragen wird, daß sich eine ausschließliche radiale Drehbewegung der Überwurfmutter (124) ergibt. Durch die diesbezügliche Ausgestaltung des erfindungsgemäßen Absperrventils ist demzufolge eine Anpassung an Armaturen möglich, die von Normgrößen abweichen.

In Fig. 6 ist eine Ausführungsform dargestellt, die die Verbindung zwischen dem Ventilkolben (18) und dem Kolbenträger (16) betrifft. So ist der Ventilkolben (18) derart auf den ventilkolben (16) gesteckt, daß ein koaxiale Relativbewegung zwischen den Elementen erfolgt, d.h., daß sie entlang einer Gemeinsamen Fläche um die Ventilachse gegeneinander drehbar sind. Hierzu weist der Kolbenträger (16) einen hutförmigen Endabschnitt (136) auf, der durch eine umlaufende Nut (137) gebildet ist, der von einem entsprechend ausgebildeten Bodenabschnitt (138) der Kolbenstange (18) derart umfaßt wird, daß die freie koaxiale Bewegung möglich ist. Mit anderen Worten ist der dem Kolbenträger zugewandte Abschnitt des Ventilkolbens hohlzylinderförmig ausgebildet mit nach innen gerichtetem Rand (139). Dieser ist teilweise entfernt, um settlich auf den Endabschnitt (136) gesteckt zu werden. Dann greift der nach innen gerichtete Rand in die Nut ein. Die Verbindungsart zwischen Ventilkolben (18) und Kolbenträger (16) kann als radial sich erstreckende Schwalbenschwanzverbindung verstanden werden. Durch eine diesbezügliche Konstruktion ist gewährleistet, daß z.B. bei festgefrorenem Ventilkolben (18) weiterhin eine Drehbewegung des Kolbenträgers (16) möglich ist, so daß ein Brechen des Ventilkolben (18) ausgeschlossen ist.

Ferner ist der Fig. 6 ein weiteres besonders hervorzuhebendes Merkmal zu enthehmen. Dies betrifft die Verbindung zwischen dem Kolbenträger (16) und der Spindel (58). So ist im Vergleich zum Ausführungsbeispiel der Fig. 1 die Spindel (58) mit dem Kolbenträger (16) nicht durch ein Sicherungselement lösbar verbunden. Vielmehr weist der Ventilkolben (58) im Abstand zur bodenseitigen Innenwandung (59) einen Umlaufenden Wulst (61) auf, der von vorzugsweise zwei diametral angeordenten in Richtung der Spindel (58) ragenden Anschnitten (63) des Kolbenträgers (16) hinterfaßt wird. (Selbstverständlich können auch eine umlaufender Abschnitt oder mehr als zwei Abschnitte vorhanden sein). Dabei erfolgt die Verbindung zwischen dem Kolbenträger (16) und der Spindel (58) erkennbar in Art einer Schnappverbindung. Die Verbindung selbst muß außerhalb des Ventilgehäuses (14) hergestellt werden, um anschließend die Einheit aus Kolbenträger (16) und (58) axial in das Ventilgehäuse einzuschieben, da andernfalls die Abschnitte (63) nicht mehr den Wulst (61) hinterfassen können. (Zwischen den diametral angeordnten Vorsprünge bildenden Abschnitten (63) sind vorzugsweise zwei weitere diametral verlaufenden nach außen gerichtete Vorsprünge vorhanden, die zur Bildung der in Fig. 1 beschriebenen Rutschkupplung mit den axial in der Innenwandung der Vertilghäuses verlaufenden Nuten wechselwirken).

Der Wulst (61) selbst bewirkt außerdem eine Hubbegrenzung des Kolbenträgers dann, wenn der Wulst (61) an dem nach innen gerichteten Vorsprung (63) anliegt. In dieser Stellung ist in dem Ausführungsbeispiel nach Fig. 6 das Ventil villständig geöffnet. Die andere Endstellung des Kolbenträgers (16) und damit des Ventilkolbens (18) wird dadurch erzielt, daß die innenliegende freie Stirnwandung (65) mit einer Bodenwandung (67) einer Aussparung (69) im Kolbenträger (16) wechselwirkt, wobei die zylindrische Aussparung (69) die Spindel (58) umgibt. In diesem Bereich weist die Spindel ein Außengewinde und die Innenwandung der Aussparung (69) ein Innengewinde auf, um so bei einer Drehbewegung der Spindel (58) die gewünschte Axialbewegung des Kolbenträgers (16) hervorzurufen.

Durch die Verbindungsart von Spindel (58) und Ventilträger (16) ergibt sich der Vorteil, daß die Spindel abgesehen von der Wulst (61) und einer als Gegenlager (71) dienenden Wulst, die and der Bodenfläche (58) des Ventilgehäuses (14) anliegt, daß ein gleichbleibender Durchmesser der Spindel (58) zur Verfügung steht. Hierdurch bedingt ergibt sich eine hohe Robustigkeit. Außerdem ergibt sich der Vorteil, daß insbesondere eine Einsatzmöglichkeit in Industrieventilen möglich ist.

In der Fig. 5 ist ein Absperrventil dargestellt, bei dem der Ventilteller (22) in einer Kammer (140) verschiebbar engeordnet ist, die von einem eine topfförmig ausgebildete, zylindrische Wandung aufweisenden Element begrenzt ist, das dem Element (104) in Fig. 3 entspricht. Stirnseitig weist das Element (142) eine umlaufende Abdichtung (144) auf, die gegen einen Abschnitt einer Armatur dichtend angelegt wird, genauso wie die Abdichtung (36) am Absatz (34) des Ventilgehäuses (14). Die Stirnseite des Elements (142) weist eine Durchtrittsöffnung (146) auf, durch die Fluide strömen kann. Diese Öffnung (146) wird nun durch ein Element (148) verschlossen, dals als Rückschlagventil dient. Das Element (148), das in den Fig. 8 und 9 näher dargestellt ist, weist einen scheibenförmigen Basiskörper (150) auf, der ventilseitig die Öffnung (146) dicht abschließen kann. Hierzu kann in einer umlaufenden Nut (152) zusätzlich ein Dichtring (154) eingesetzt werden. Im übrigen ist der Durchmesser des scheibenförmigen Basiskörpers (150) größer als der lichte Durchmesser der Durchtrittsöffnung (146). Aus der Fig. 5 wird erkennbar, daß der scheibenförmige Basiskörper (150) auf der außenseitig planen, senkrecht zur Längsachse des Ventils verlaufenden Fläche des Ventiltellers (22) aufliegt. Um jedoch ein Verkanten des Elementes (148) innerhalb der Kammer (140) auszuschließen, gehen von dem Basiskörper (150) vorzugsweise vier Vorsprünge (154) aus, die entlang der Innenwandung (158) der Kammer (140), also des topfförmigen Elementes (142) entlang gleiten. Ferner ragen von dem Basiskörper (150) Vorsprünge (160) und (162) ab, die durch Stege gebildet sind und sich rechtwinklig schneiden, so daß sich in Draufsicht eine Kreuzform ergibt. Diese auch als Flügel zu bezeichnenden Vorsprünge (160), (162) gleiten and der Innenwandung (164) der Öffnung (146), wodurch ebenfalls eine Verkippsicherung gewährleistet ist. Sollte nun ein Fluid entgegen der normalen Strömungsrichtung durch die von dem Ventilsitz (20) umgebende Öffnung in die Kammer (140) strömen, so wird das Element (148) erfaßt und dichtet somit die Öffnung (146) ab.

Obwohl in den Ausführungsbeispielen die Erfindung in Hand einer Sanitärarmatur beschrieben wurde, sind Anwendungen auf unterschiedlichsten Gebieten mäglich. Bevorzugte Einsatzbereich sind chemische oder physikalische Labore, in denen Absperrventils verwendet werden, durch die Flüssigkeiten und Gase zu regulieren sind. Insbesondere der Umstand, daß der erfindungsgemäß Absperrventil aus Kunststoff besteht, bietet den Vorteil, daß ein Einsatz überall dort möglich ist, wo aggressive Fluide auftreten. Da konstruktions- und materialbedingt nur ein über- aus geringer Verschleiß auftritt und außerdem eine Überlastung des Ventils durch ein "Überdrehen" -in welche Richtung auch immernicht möglich ist, ist das erfindungsgemäße Absperrventil überaus wartungsarm und gewährleistet eine hohe Funktionstüchtigkeit.

**Patentansprüche**

1. Absperrventil (10) für Fluide umfassend ein Ventilgehäuse (14), einen Ventilkolben (180 mit stromaufwärts zu einem zugeordneten Ventilsitz (20) angeordneten Ventilkegel (22) und einen den Ventilkolben aufnehmenden axial in dem Ventilgehäuse mittels einer Spindel (58) verschiebbaren Kolbenträger (16), wobei dann die axiale Bewegung des Kolbenträgers in eine radiale Bewegung übergeht, wenn der Ventilkolben eine Hubbegrenzung erreicht, dadurch gekennzeichnet, daß der Kolbenträger (16) außenwandig axial verlaufende Vorsprünge (52) aufweist, die in zugeordnete axial verlaufende Aussparungen (62) in der Innenwandung (64) des Ventilgehäuses (14) axial gleiten oder bei Erreichung der Hubbegrenzung zur Erzielung der radialen Bewegung in jeweils benachbarte Aussparungen einbringbar sind und umgekehrt.

2. Absperrventil nach Anspruch 1, dadurch gekennzeichnet, daß der Kolbenhalter (16) mittig eine axial verlaufende Aussparung (78) aufweist, in der ein erster Abschnitt (72) der Spindel (58) hineinragt, und daß der Kolbenhalter zu dem ersten Abschnitt axial verschiebbar und in der Aussparung lösbar über ein Sicherungselement (86) mit der Spindel verbunden ist.

3. Absperrventil nach Anspruch 2, dadurch gekennzeichnet, daß der erste Abschnitt (72) einen kleineren Durchmesser als die Aussparung (78) aufweist, daß der erste Abschnitt außenseitig von einem Scheibenelement (82) und innenseitig von einem weiteren Abschnitt (74) der Spindel (58) jeweils größeren Durchmessers begrenzt ist und daß die Hubbewegung des Kolbenträgers (16) jeweils durch Wechselwirken des Sicherungselementes (86) mit dem Scheibenelement bzw. dem weiteren Abschnitt begrenzbar ist.

4. Absperrventil nach Anspruch 3, dadurch gekennzeichnet, daß das Sicherungselement (86) eine Scheibe ist, die durch einen radial in der Wandung des Kolbenträgers (16) verlaufenden Schlitz (84) in die Aussparung (78) zum Umgeben des ersten Abschnitts (72) einsetzbar ist.

5. Absperrventil nach Anspruch 1, dadurch gekennzeichnet, daß die eine von dem Fluid durchströmte Armatur (12) mit dem Ventil (10) verbindende Öffnung (146) von einem koaxial zum Ventilkolben (18) angeordneten und axial verschiebbaren ein Rückschlagventil bildendes Element (94, 148) verschließbar ist.

6. Absperrventil nach Anspruch 5, dadurch gekennzeichnet, daß das Element (94) den Ventilkolben (18) umgibt und über ein Federelement (96) gegen einen den Ventilsitz (20) aufnehemenden Ventilgehäuseabschnitt (44) drückbar ist.

7. Absperrventil nach Anspruch 5, dadurch gekennzeichnet, daß das Element als Lochscheibe (94) ausgebildet und dessen äußerer dem Ventilteller (22) zugewandter Rand (98) abgeschrägt ist, der an einen in Richtung des Ventilkolbens (18) sich erstreckenden umlaufenden Ventilgehäuseabschnitt anlegbar ist, der seinerseits den Ventilsitz (20) abstützend aufnimmt.

8. Absperrventil nach Anspruch 1, dadurch gekennzeichnet, daß der Ventilteller (22) in einer von dem Ventilhehäuse (14) ausgehenden Kammer (106, 140) verschiebbar angeordnet ist, die ihrerseits im Stirnseitenbereich dichtend an einen Abschnitt einer Armatur enliegt.

9. Absperrventil nach Anspruch 8, dadurch gekennzeichnet, daß die hohlzylinderförmig ausgebildete Kammer (140) eine koaxial zum Ventilkolben (18) angeordnete Fluideintrittsöffnung (146) aufweist, die von dem als Rückschlagventil dienenden und in der Kammer axial verschiebbaren Element (148) verschließbar ist.

10. Absperrventil nach Anspruch 9, dadurch gekennzeichnet, daß das Element (148) einen scheibenförmigen Basiskörper (150) umfaßt, das die Eintrittsöffnung (146) in gewünschtem Umfang vollständig abschließt, daß von dem Basiskörper erste Vorsprünge (154) ausgehen, die an der Innenwandung (158) der Kammer (140) entlanggleiten, und daß von der der Eintrittsöffnung zugewandten Fläche des Basiskörpers zweite Vorsprünge (106, 162) zur Erzielung einer geführten axialen Bewegung des Elementes in die Eintrittsöffnung hinein erstrecken.

11. Absperrventil nach Anspruch 10, dadurch gekennzeichnet, daß die zweiten Vorsprünge (160, 162) in Draufsicht ein Kreuz bilden.

12. Absperrventil nach Anspruch 1, dadurch gekennzeichnet, daß der Ventilkolben (18) seitlich auf den Kolbenhalter (16) derart gesteckt ist, daß eine koaxiale relative Drehbewegung zueinander ermöglichbar ist.

13. Absperrventil nach Anspruch 1, dadurch gekennzeichnet, daß die Außenwandung des Ventilgehäuses (14) zumindest abschnittsweise von einem ein Innengewinde aufweisenden Anschlagelement (116, 124) umgeben ist, das mittelbar oder unmittelbar auf das Ventilgehäuse schraubbar ist, und daß in Abhängigkeit von dem zum Schrauben aufzubringenden Drehmoment die durch die Schraubbewegung hervorgerufene axiale Bewegung des Anschlagselementes ausschließlich in eine radiale Bewegung übergeht.

14. Absperrventil nach Anspruch 13, dadurch gekennzeichnet, daß das Anschlegelement (124) wie Überwurfmutter ein Innengewinde aufweist und auf ein an der Außenwandung des Ventilgehäuses vorhandenes Außengewinde (126) schraubbar ist, daß das Anschlagelement von einem hohlzylinderischen Element (128) abschnittsweise umfaßt ist, über das die Drehmomentübertragung erfolgt, daß das Anschlagelement Vorsprünge aufweist, die in zugeordnete Aussparungen des hohlzylinderischen Elements eingreift, wobei zur Erzielung der ausschließlich radialen Bewegung die Vorsprünge in jeweils benachbarte Aussparungen einbringbar sind und umgekehrt.

15. Absperrventil nach Anspruch 14, dadurch gekennzeichnet, daß das Anschlagelement (126) eine in Richtung des hohlzylindrischen Elements (128) sich erstreckende Nut (132) aufweist, in die das Element zur Drehmomentübertragung eingreift.

16. Absperrventil Anspruch 13, dadurch gekennzeichnet, daß das Anschlagelement (166) auf einen das Ventilgehäuse (14) umgebenden Hohlzylinder (122) schraubbar ist, der seinerseits über Vorsprünge und/oder Ausnehmungen mit dem Ventilgehäuse derart verbunden ist, daß in Abhängigkeit von dem auf das Anschlagelement einwirkenden Drehmoment die ausschließlich radiale Verdrehbarkeit gegeben ist oder unterbleibt.

17. Absperrventil nach Anspruch 16, dadurch gekennzeichnet, daß die Fluideintrittsöffnung der Kammer (106) von einer fluiddurchlässigen, Fremdkörper abweisenden Scheibe (112) abgedeckt ist.

**Revendications**

1. Soupape de fermeture (10) pour fluides comprenant un boîtier de soupape (14), un piston de soupape (18) avec un cône de soupape (22) disposé en amont par rapport au siège de soupape (20) correspondant et un support de piston (16) pouvant coulisser, logeant axialement le piston de soupape dans le boîtier de soupape au moyen d'une broche (58), le mouvement axial du support de piston étant transformé en un mouvement radial quand le piston de soupape a atteint sa fin de course, caractérisée en ce que: le support de piston (16) présente sur sa paroi externe des saillies axiales (52) qui coulissent axialement dans des évidements (62) axiaux correspondant de la paroi interne (64) du boîtier de soupape (14) ou qui peuvent s'insérer dans chaque évidement voisin lorsqu'il est en fin de course pour prendre un mouvement radial et inversement.

2. Soupape de fermeture selon la revendication 1, caractérisée en ce que le support de piston (16) comprend au milieu un évidement axial (78) dans laquelle pénètre une première partie (72) de la broche (58), et que le support de piston peut coulisser axialement par rapport à la première partie et est lié à la broche de manière démontable dans l'évidement par un élément de sécurité (86).

3. Soupape de fermeture selon la revendication 2, caractérisée en ce que la première partie (72) présente un diamètre plus petit que l'évidement (78), que la première partie est limitée vers l'extérieur par un élément de disque (82) et intérieurement par une autre partie (74) de la broche chaque fois de diamètre supérieure et que la fin de course du support de piston (16) est limitée chaque fois par coopération de l'élément de sécurité (86) avec l'élément de disque ou bien avec l'autre partie.

4. Soupape de fermeture selon la revendication 3, caractérisée en ce que l'élément de sécurité (86) est un disque, qui peut être monté dans l'évidement (78) autour de la première partie (72) grâce à une fente (84) s'étendant radialement dans la paroi du support de piston (16).

5. Soupape de fermeture selon la revendication 1, caractérisée en ce que l'orifice en connexion (146) à la soupape (10) à partir d'une robinetterie (12) parcourue par un fluide peut être obturé par un élément (94, 148) faisant office de soupape antiretour, coulissant axialement et placé coaxialement au piston du soupape (18).

6. Soupape de fermeture selon la revendication 5, caractérisée en ce que l'élément (94) entoure le piston de soupape (18) et peut être appliqué par un élément de ressort (96) sur la section de boîtier de soupape (44) qui reçoit le siège de soupape (20).

7. Soupape de fermeture selon la revendication 5, caractérisée en ce que l'élément est en forme d'un disque percé (94) dont le bord (98) externe tourné vers le siège de soupape (22) présente un chanfrein, qui peut s'appuyer sur une partie de boîtier de soupape qui l'entoure et s'étend en direction du piston de soupape (18) et qui reçoit de son côté en appui le siège de soupape (20).

8. Soupape de fermeture selon la revendication 1, caractérisée en ce que le siège de soupape (22) est placé en coulissement dans une chambre (106, 140) qui s'étend depuis le boîtier de soupape (14), et qui repose de manière étanche par sa face frontale sur une partie de la robinetterie.

9. Soupape de fermeture selon la revendication 8, caractérisée en ce que la chambre en forme de cylindre creux (140) présente un orifice d'entrée de fluide (146) coaxialement au piston de soupape (18), qui peut être obturé par l'élément (148) coulissant axialement dans la chambre et servant de soupape antiretour.

10. Soupape de fermeture selon la revendication 9, caractérisée en ce que l'élément (148) entoure un corps de base en forme de disque (150), qui obture entièrement l'orifice d'entrée (146) de la manière souhaitée, que des premières saillies (154) partent du corps de base, qui coulissent sur la paroi interne (158) de la chambre (140) et en ce que des secondes sailles (160, 162) s'étendent depuis la surface du corps tournée vers l'orifice d'entrée pour réaliser un mouvement axial guidé de l'élément dans l'ouverture d'entrée.

11. Soupape de fermeture selon la revendication 10, caractérisée en ce que les seconde saillies (160, 162) forment une croix en vue de-dessus.

12. Soupape de fermeture selon la revendication 1, caractérisée en ce que le piston de soupape (18) est placé latéralement sur le support de piston (16), de façon à ce que soit possible un mouvement de rotation relatif coaxial.

13. Soupape de fermeture selon la revendication 1, caractérisée en ce que la paroi externe du boîtier de soupape (14) est entourée au moins partiellement d'un élément de butée (116, 124), qui peut être vissé directement ou indirectement sur le boîtier de soupape et que, en fonction du couple appliqué à la vis, le mouvement axial provoqué par le mouvement de la vis se transforme exclusivement en un mouvement radial.

14. Soupape de fermeture selon la revendication 13, caractérisée en ce que l'élément de butée (124) présente un filetage interne sous forme d'un écrou d'accouplement vissable sur le filetage (126) de la paroi externe du boîtier de soupape, en ce que l'élément de butée est serré en partie par un élément cylindrique creux (128) per lequel s'effectue le couple, en ce que l'élément de butée présente des saillies qui sont en prise dans des évidements correspondants de l'élément de cylindrique creux, celles-ci étant logées dans chaque évidement voisin pour obtenir le déplacement exclusivement radial, et inversement.

15. Soupape de fermeture selon la revendication 14, caractérisée en ce que l'élément de butée (126) présente une gorge (132) qui s'étend dans la direction de l'élément de cylindre creux (128) dans lequel l'élément est en prise pour transmettre le couple.

16. Soupape de fermeture selon la revendication 13, caractérisée en ce que l'élément de butée (116) est vissable sur un cylindre creux (122) entourant le boîtier de soupape (14) que de son côté est lié au boîtier de soupape pár des saillies et/ou des évidements, de sorte que, en fonction du couple agissant sur l'élément de butée, on donne la possibilité, ou non, de rotaion exclusivement radiale.

17. Soupape de fermeture selon la revendication 16, caractérisée en ce que l'orifice d'entrée de fluide de la chambre (106) est protégé par un disque (112) perméable aux fluides et arrêtent les corps étrangers.

**Claims**

1. A shut-off valve (10) for fluids comprising a valve housing (14), a valve piston (18) with valve cone (22) arranged upstream of an associated valve seat (20), and a piston holder (16) axially movable within the valve housing by means of a spindle (58) and accommodating said valve piston, with the axial motion of said piston holder being converted to a radial motion when said valve piston reaches a stroke limit, characterized in that said piston holder (16) has on its outer wall axial projections (52) which slide axially in associated axial recesses (62) in the inner wall (64) of said valve housing (14) or are movable into respectively adjacent recesses when the stroke limit is reached to achieve a radial motion and vice versa.

2. A shut-off valve according to Claim 1, characterized in that the piston holder (16) has in its centre an axial recess (78) into which a first sector (72) of the spindle (58) projects, and that said piston holder is axially adjustable in relation to said first sector and is releasably connected in the recess to said spindle by a retaining element (86).

3. A shut-off valve according to Claim 2, characterized in that the first sector (72) has a smaller diameter than the recess (78), that said first sector is limited on the outside by a disc element (82) and on the inside by a further sector (74) of the spindle (58) having a greater diameter in each case, and that the stroke motion of the piston holder (16) is limitable by interaction of the retaining element (86) with said disc element or with said further sector.

4. A shut-off valve according to Claim 3, characterized in that the retaining element (86) is a disc which is insertable into the recess (78) through a radial slot in the wall of the piston holder (16) in order to enclose the first sector (72).

5. A shut-off valve according to Claim 1, characterized in that the port (146) connecting a fitting (12) carrying fluid and the valve (10) is closable by an element (94, 148) arranged coaxially to the valve piston (18), axially adjustable, and constituting a non-return valve.

6. A shut-off valve according to Claim 5, characterized in that the element (94) surrounds the valve piston (18) and is pressable via a spring element (96) against a valve housing sector (44) accommodating the valve seat (20).

7. A shut-off valve according to Claim 5, characterized in that the element is designed as a perforated disc (94) having its outside edge (98) facing the valve head (22) angled, said edge being applicable to an all-round valve housing sector extending in the direction of the valve piston, said sector in its turn serving to support the valve seat (20).

8. A shut-off valve according to Claim 1, characterized in that the valve head (22) is movably arranged in a chamber (106, 140) extending from the valve housing (14), said chamber in its turn abutting in sealing contact against the face of a sector of a fitting.

9. A shut-off valve according to Claim 8, characterized in that the hollow-cylindrical chamber (140) has a fluid entry port (146) which is arranged coaxially to the valve piston and which is closable by the element (148) serving as a non-return valve and being axially adjustable within said chamber.

10. A shut-off valve according to Claim 9, characterized in that the element (148) comprises a disc-like base element (150) which completely closes the entry port (146) to the required extent, that first projections (154) extend from the base element and slide along the internal wall (158) of the chamber (140), and that second projections (160, 162) from the base element surface facing said entry port extend into said entry port to achieve a controlled axial motion of said element.

11. A shut-off valve according to Claim 10, characterized in that the second projections (160, 162) form a cross in the plan view.

12. A shut-off valve according to Claim 1, characterized in that the valve piston (18) is mounted on the side of the piston holder (16) in such a way that their coaxial rotation relative to one another is feasible.

13. A shut-off valve according to Claim 1, characterized in that the external wall of the valve housing (14) is surrounded at least in sectors by a stop element (116, 124) having a female thread and being indirectly or directly screwable onto said valve housing, and that the axial motion of said stop element cause by the screwing operation is converted into an exclusively radial motion depending on the torque required for the screwing operation.

14. A shut-off valve according to Claim 3, characterized in that the stop element (124) and the cap nut have a female thread and are screwable onto a male thread (126) provided on the outer wall of the valve housing, that stop element is surrounded in sectors by a hollow cylinder element (128) via which the torque is transmitted, that said stop element has projections which engage in associated recesses of said hollow cylinder element, where the projections are movable into respectively adjacent recesses to achieve the exclusively radial motion and vice versa.

15. A shut-off valve according to Claim 14, characterized in that the stop element (126) has a groove (132) extending in the direction of the hollow-cylindrical element (128), into which grooves said element engages to transmit the torque.

16. A shut-off valve according to Claim 13, characterized in that the stop element (116) is screwable onto a hollow cylinder (122) enclosing the valve housing (14), said cylinder in its turn being connected by projections and/or recesses to said valve housing in such a way that exclusively radial rotatability is achieved or prevented depending on the torque acting on said stop element.

17. A shut-off valve according to Claim 14, characterized in that the fluid entry port of the chamber (106) is covered by a fluid-permeable, foreign particle-resistant disc (112).

FIG.1

FIG.3

FIG.2

FIG.4

FIG. 5

FIG. 7

FIG. 6

EP 0 321 500 B1

FIG.11

FIG.12

FIG.10

FIG.8

FIG.9